# EUROPEAN PATENT APPLICATION

(11) **EP 4 729 291 A1**
(43) Date of publication of application: **22.04.2026**
(21) Application number: 24844861.5
(22) Date of filing: 26.07.2024
(51) Int. Cl.: B32B 17/06, C03C 27/12, C03C 17/36, B60J 1/00, G02B 27/01

(54) **LAMINATED GLASS, DISPLAY SYSTEM, AND VEHICLE**

(30) Priority: 26.07.2023 CN 202310925638
(71) Applicant: Fuyao Glass Industry Group Co., Ltd., Fuqing, Fujian 350300 (CN)
(72) Inventor: CHEN, Bingjing, Fuzhou, Fujian 350300 (CN); ZHANG, Canzhong, Fuzhou, Fujian 350300 (CN); GUAN, Jinliang, Fuzhou, Fujian 350300 (CN)
(74) Representative: Mewburn Ellis LLP
(86) International application number: PCT/CN2024/107689
(87) International publication number: WO 2025/021175

(57) **Abstract**

A laminated glass, a display system, and a vehicle is provided in the present disclosure. The laminated glass includes an outer glass plate, an inner glass plate, an adhesive layer, and an infrared reflection coating. The outer glass plate has a first surface and a second surface opposite to each other. The inner glass plate has a third surface and a fourth surface opposite to each other. The adhesive layer is used to adhere the outer glass plate and the inner glass plate, having a fifth surface and a sixth surface opposite to each other, and the fifth surface and the sixth surface incline relative to each other, so as to enable the adhesive layer to be wedge-shaped. The infrared reflection coating is disposed between the second surface and the fifth surface. A thickness of the outer glass plate is less than that of the inner glass plate. The preset wedge angle αS defined between the fifth surface and the sixth surface of the adhesive layer satisfies the following. α1 ≤ αS ≤ α2, α1 represents a first theoretical wedge angle, α2 represents a second theoretical wedge angle. The laminated glass provided by the present disclosure can reduce the impact on vision of the driver and improve the driving experience.

## Description

### CROSS-REFERENCE TO RELATED APPLICATION(S)

This application claims priority to Chinese Patent Application No. 202310925638. 5, filed with the China National Intellectual Property Administration on July 26, 2023, the entire disclosure of which is hereby incorporated by reference.

### TECHNICAL FIELD

This disclosure relates to the field of vehicle technology, and particularly, to a laminated glass, a display system, and a vehicle.

### BACKGROUND

In recent years, head-up display (HUD) systems have been widely applied in vehicles to reduce operations of drivers to look down at instrument panels for achieving information, thereby improving safety of driving. An HUD in a vehicle consists of a front windshield and a projection assembly. When the projection assembly emits a projection light ray onto the front windshield, the drivers are able to see projected information. In related art, a laminated glass includes four layers with even thickness: an outer glass plate, an inner glass plate, an adhesive layer, and an infrared reflection coating. Among them, the adhesive layer and the infrared reflection coating are both disposed between the outer glass plate and the inner glass plate, the adhesive layer is used to adhere the outer glass plate and the inner glass plate, and the infrared reflection coating is used to achieve functions such as heating, etc. However, when the projection assembly emits the projection light ray towards the laminated glass, in addition to a primary image containing the projected information, the drivers may also see two ghost images: a first ghost image and a second ghost image, both are blurred and do not overlap with the primary image. As a result, visions and driving experiences of the drivers are affected.

### SUMMARY

A laminated glass, a display system, and a vehicle are provided in the present disclosure, where the laminated glass, the display system, and the vehicle can reduce influence on a vision of a driver and improve a driving experience.

In a first aspect, a laminated glass is provided in the present disclosure. The laminated glass is configured to form a primary image according to a projection light ray emitted by a projection assembly. The laminated glass includes an outer glass plate, an inner glass plate, an adhesive layer, and an infrared reflection coating. The outer glass plate has a first surface and a second surface opposite to each other. The inner glass plate has a third surface and a fourth surface opposite to each other, the third surface and the second surface face towards each other. The adhesive layer is disposed between the outer glass plate and the inner glass plate to adhere the outer glass plate with the inner glass plate. The adhesive layer has a fifth surface and a sixth surface opposite to each other, the fifth surface and the second surface face towards each other, and the sixth surface and the third surface face towards each other. The fifth surface and the sixth surface incline relative to each other to enable the adhesive layer to be wedge-shaped. The infrared reflection coating is disposed between the second surface and the fifth surface. A thickness of the outer glass plate is less than a thickness of the inner glass plate. A preset wedge angle αS defined between the fifth surface and the sixth surface of the adhesive layer satisfies the following. α1 ≤ αS ≤ α2. When the projection light ray emitted by the projection assembly is incident on the fourth surface, the projection light ray is reflected by the fourth surface to form the primary image. After passing through the inner glass plate and the adhesive layer, the projection light ray is incident on the infrared reflection coating and is reflected by the infrared reflection coating to form a first secondary image. After passing through the infrared reflection coating, the projection light ray is incident on the first surface of the outer glass surface and is reflected by the first surface to form a second secondary image. α1 represents a first theoretical wedge angle, and the first theoretical wedge angle is a required angle defined between the fifth surface and the sixth surface for completely overlapping the first secondary image and the primary image. α2 represents a second theoretical wedge angle, and the second theoretical wedge angle is a required angle defined between the fifth surface and the sixth surface for completely overlapping the second secondary image and the primary image.

In some embodiments, the preset wedge angle αS defined between the fifth surface and the sixth surface of the adhesive layer satisfies the following. When A1 ≥ A2, α2 - αS ≥ αS - α1; and when A1 < A2, α2 - αS < αS - α1. A1 represents a brightness ratio of the first secondary image and the primary image, A1 = S1/S, A2 represents a brightness ratio of the second secondary image and the primary image, A2 = S2/S, S1 represents brightness of the first secondary image, S2 represents brightness of the second secondary image, and S represents brightness of the primary image.

In some embodiments, the laminated glass satisfies the following. α2 - αS ≤ 0.10 mrad, αS - α1 ≤ 0.14 mrad.

In some embodiments, the laminated glass satisfies the following. A1 ≤ 20% and/or A2 ≤ 20%. A1 represents the brightness ratio of the first secondary image and the primary image, A1 = S1/S, A2 represents the brightness ratio of the second secondary image and the primary image, A2 = S2/S, S1 represents the brightness of the first secondary image, S2 represents the brightness of the second secondary image, and S represents the brightness of the primary image.

In some embodiments, the preset wedge angle αS defined between the fifth surface and the sixth surface ranges from 0.1 mrad to 1.0 mrad.

In some embodiments, a thickness of the outer glass plate is referred to as H1, where H1 ranges from 0.5 mm to 1.8 mm.

In some embodiments, when the outer glass plate is a physical tempered glass, a thickness of the outer glass plate ranges from 1.2 mm to 1.8 mm; when the outer glass plate is a chemical tempered glass, the thickness of the outer glass plate ranges from 0.5 mm to 1.2 mm.

In some embodiments, a thickness of the adhesive layer ranges from 0.3 mm to 1.0 mm.

In some embodiments, a material of the adhesive layer is at least one of polycarbonate (PC), polyvinyl chloride (PVC), polyvinyl butyral (PVB), ethylene-vinyl acetate (EVA), polyacrylate (PA), polymethyl methacrylate (PMMA), polyurethane (PUR), or ionic polymer (e.g., SentryGlas Plus (SGP)).

In some embodiments, the infrared reflection coating includes at least one metal layer, and a material of the at least one metal layer is at least one of aurum (Au), silver (Ag), copper (Cu), aluminum (Al), molybdenum (Mo), or an alloy, and where the alloy is composed of silver and at least one of copper (Cu), aurum (Au), palladium (Pd), tin (Sn), zinc (Zn), plumbum (Pb), or nickel (Ni).

In some embodiments, the material of the adhesive layer is a modified EVA, a vinyl acetate (VA) content in the modified EVA ranges from 5% to 40%, and in a sound frequency range of 1600 Hz to 3250 Hz, a laminated glass formed by two 3 mm-thick glass plates and a 0.8 mm-thick modified EVA has a sound transmission loss of at least 42 db.

In a second aspect, a display system is provided in the present disclosure. The display system includes a projection assembly and a laminated glass, where the projection assembly is configured to emit a projection light ray towards the laminated glass.

In a third aspect, a vehicle is provided in the present disclosure. The vehicle includes a vehicle frame and a display system, where the display system is carried on the vehicle frame.

In the laminated glass provided in the present disclosure, the fifth surface and the sixth surface of the adhesive layer incline relative to each other, so as to enable the adhesive layer to be wedge-shaped. It can be understood that if an angle at which the fifth surface and the sixth surface incline relative to each other is changed, a propagation path of a light ray passing through the adhesive layer will also be changed. With regard to the primary image, it is formed by a first light ray being directly reflected by the fourth surface, therefore a position of the primary image will not be affected by a wedge-shaped adhesive layer. With regard to the first secondary image, it is formed by a second light ray being reflected by the infrared reflection coating, and the infrared reflection coating is disposed between the outer glass plate and the adhesive layer, therefore, in the process of being incident on the fourth surface and exiting from the fourth surface, the second light ray will pass through the adhesive layer, and a propagation path of the second light ray will be affected by the wedge-shaped adhesive layer. With regard to the second secondary image, it is formed by a third light ray being reflected by the first surface, and in the process of being incident on the fourth surface and exiting from the fourth surface, the third light ray will pass through the adhesive layer, therefore, a propagation path of the third light ray will be affected by the wedge-shaped adhesive layer. In summary, if the angle at which the fifth surface and the sixth surface incline relative to each other is changed, the propagation paths of the second light ray and the third light ray will be changed correspondingly, and the positions of the first secondary image and the second secondary image will further be changed. Therefore, in design phase, the angle at which the fifth surface and the sixth surface incline relative to each other may be set according to the position of the primary image, making the first secondary image and the second secondary image as close as possible to the primary image. Therefore, compared with an adhesive layer with even thickness in related art, the wedge-shaped adhesive layer in the present disclosure enables the second light ray and the third light ray to deflect, so that the first secondary image and the second secondary image may get closer to the primary image respectively. It can be understood that the closer the first secondary image and the second secondary image are to the primary image respectively, the more the first secondary image and the second secondary image overlap with the primary image respectively, therefore the influence of the first secondary image and the second secondary image on the vision of the driver is reduced, and the driving experience is improved. Secondly, the thickness of the outer glass plate is less than the thickness of the inner glass plate. With such arrangement, a distance between the primary image and the second secondary image is relatively small, enabling the primary image to be presented clearer. In addition, since the laminated glass satisfies α1 ≤ αS ≤ α2, both the first secondary image and the second secondary image may be as close as possible to the primary image respectively, so that the primary image seen by human eyes clearer.

### BRIEF DESCRIPTION OF THE DRAWINGS

For clearer description of the technical solutions of the embodiments of the present disclosure, the following briefly introduces the accompanying drawings required for describing the implementations. Apparently, the accompanying drawings described in the following are merely some implementations of the present disclosure, and those of ordinary skill in the art may still derive other drawings from these accompanying drawings without creative efforts.
FIG. 1 is a schematic diagram of a vehicle provided in embodiments of the present disclosure.
FIG. 2 is a schematic diagram of a display system provided in embodiments of the present disclosure.
FIG. 3 is a schematic diagram of a laminated glass in related art.
FIG. 4 is a schematic diagram of a laminated glass provided in embodiments of the present disclosure.
FIG. 5 is a schematic diagram of optical imaging of the laminated glass illustrated in FIG. 4.
FIG. 6 is a schematic diagram of a first secondary image and a primary image being completely overlapped for human eyes provided in embodiments of the present disclosure.
FIG. 7a illustrates a ghosting condition of a primary image and a second secondary image of a first image when a thickness of an outer glass plate is 1.8 mm provided in embodiments of the present disclosure.
FIG. 7b illustrates a ghosting condition of a primary image and a second secondary image of a first image when a thickness of an outer glass plate is 1.6 mm provided in embodiments of the present disclosure.
FIG. 8a illustrates a ghosting condition of a primary image and a second secondary image of a second image when a thickness of an outer glass plate is 2.1 mm provided in embodiments of the present disclosure.
FIG. 8b illustrates a ghosting condition of a primary image and a second secondary image of a second image when a thickness of an outer glass plate is 1.8 mm provided in embodiments of the present disclosure.
FIG. 8c illustrates a ghosting condition of a primary image and a second secondary image of a second image when a thickness of an outer glass plate is 1.6 mm provided in embodiments of the present disclosure.
FIG. 9 illustrates second theoretical wedge angles corresponding to different thickness of outer glass plates provided in embodiments of the present disclosure.
FIG. 10 illustrates adhering stabilities of adhesive layers with different materials provided in embodiments of the present disclosure.
FIG. 11 is a comparison diagram of sound transmission loss provided in embodiments of the present disclosure.

### DETAILED DESCRIPTION

The technical solutions in embodiments of the present disclosure are clearly and completely described in the following with reference to the accompanying drawings in the embodiments of the present disclosure. Apparently, the described embodiments are merely a part of rather than all the embodiments of the present disclosure. All other embodiments obtained by those of ordinary skill in the art based on the embodiments of the present disclosure without creative efforts are within the scope of protection of the present disclosure.

The term "embodiment" or "implementation" referred to herein means that a particular feature, structure, or feature described in conjunction with the embodiment or implementation may be contained in at least one embodiment of the present disclosure. The phrase appearing in various places in the specification does not necessarily refer to the same embodiment, nor does it refer an independent or alternative embodiment that is mutually exclusive with other embodiments. It is expressly and implicitly understood by those skilled in the art that an embodiment described herein may be combined with other embodiments.

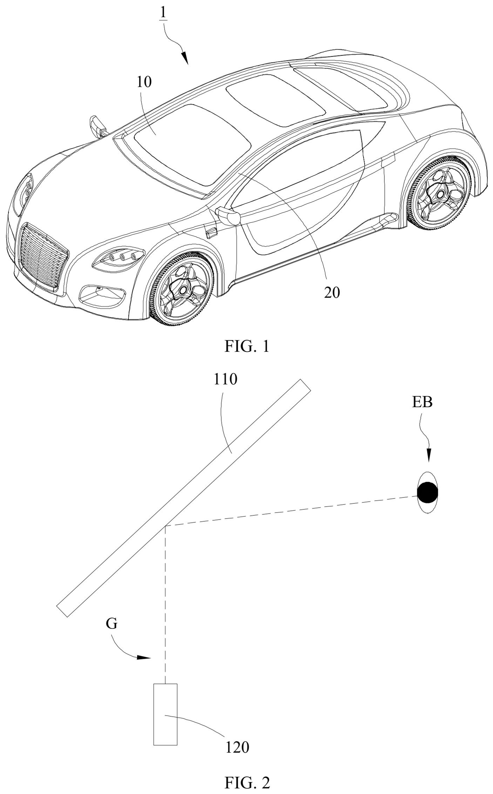

Referring to FIG. 1, a vehicle 1 is provided in the present disclosure, the vehicle 1 may be, but is not limited to, a car, a multi-purpose automobile (MPV), a sport/suburban utility vehicle (SUV), an off-road automobile (ORV), a pick-and-place automobile, a minivan, a passenger car, a cargo truck, etc.

The vehicle 1 includes a vehicle frame 20 and a display system 10, where the display system 10 is directly or indirectly carried on the vehicle frame 20. The vehicle frame 20 refers to a framework that is used to support and connect each of various assemblies of the vehicle 1, to keep each of the various assemblies in a correct position, and to bear various loads inside and outside the vehicle 1. The display system 10 may also be referred to as a head-up display system (HUD).

Referring to FIG. 2, a display system 10 is also provided in the present disclosure. The display system 10 includes a projection assembly 120 and a laminated glass 110. The laminated glass 110 refers to a front windshield that light ray can pass through. The projection assembly 120 is configured to emit projection light ray G towards the laminated glass 110, and the projection light ray G is reflected on the laminated glass 110 to form a projected image visible to human eyes of passengers inside vehicles, that is, the projection assembly 120 is configured to provide the projection light ray G. Optionally, the projection light ray G includes a S-polarized light in a proportion ranging from 20% to 90%. The laminated glass 110 is used to reflect the projection light ray G into an eye-box (EB), enabling a driver to see projected information, such as a vehicle speed, navigation, etc. It may be noted that since the laminated glass 110 is a transparent body, after the projection assembly 120 emitting the projection light ray G, what is formed is a virtual image containing the projected information. A position for imaging the virtual image is not on the laminated glass 110, but roughly in front of a bumper of the vehicle 1, with its height above a front end of an engine hood.

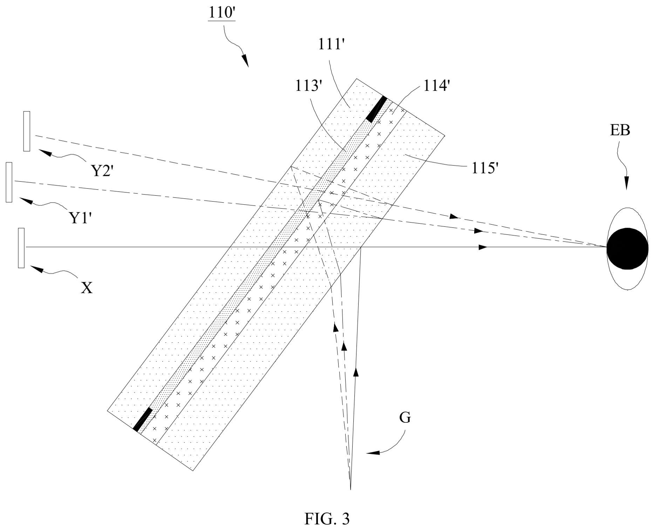

Referring to FIG. 3, in the related art, a laminated glass 110' includes an outer glass plate 111', an inner glass plate 115', an adhesive layer 114', and an infrared reflection coating 113'. Both the adhesive layer 114' and the infrared reflection coating 113' are disposed between the outer glass plate 111' and the inner glass plate 115'. The adhesive layer 114' is used to adhere the outer glass plate 111' with the inner glass plate 115', and a cross-sectional shape of the adhesive layer 114' is rectangular, that is, a wedge angle of the adhesive layer 114' is almost equal to 0. The infrared reflection coating 113' is used to achieve functions such as heating, thermal insulation, etc. However, when the projection assembly 120 emits projection light ray G towards the laminated glass 110', in addition to a primary image X' containing projected information, the driver also sees two ghost images: a first secondary image Y1' and a second secondary image Y2', both are blurred and do not overlap with the primary image X'. As a result, a vision and a driving experience of the driver are affected.

The present disclosure intends to provide a solution to solve, but is not limited to, the aforementioned technical problems, and detailed content thereof will be elaborated in the following embodiments.

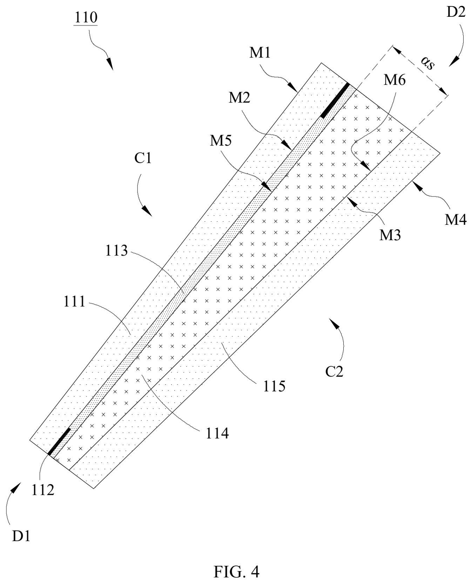

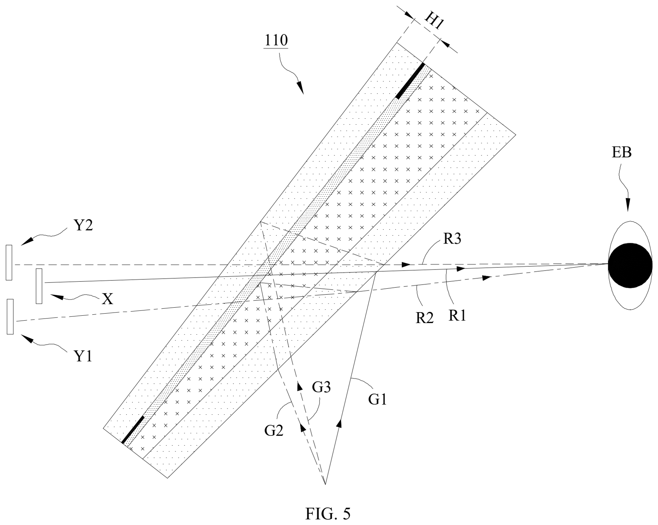

Referring to FIG. 4 and FIG. 5, a laminated 110 is also provided in the present disclosure, which is used to form a primary image X according to a projection light ray G emitted by a projection assembly 120. The laminated glass 110 includes an outer glass plate 111, an inner glass plate 115, an adhesive layer 114, and an infrared reflection coating 113.

The outer glass plate 111 has a first surface M1 and a second surface M2 opposite to each other.

The inner glass plate 115 has a third surface M3 and a fourth surface M4 opposite to each other. The third surface M3 and the second surface M2 face towards each other.

The adhesive layer 114 is disposed between the outer glass plate 111 and the inner glass plate 115 to adhere the outer glass plate 111 and the inner glass plate 115. The adhesive layer 114 has a fifth surface M5 and a sixth surface M6 opposite to each other, the fifth surface M5 and the second surface M2 face towards each other, the sixth surface M6 and the third surface M3 face towards each other. The fifth surface M5 and the sixth surface M6 incline relative to each other to enable the adhesive layer 114 to be wedge-shaped. The expression "incline relative to each other" means that the fifth surface M5 and the sixth surface M6 are not parallel to each other, so the adhesive layer 114 is wedge-shaped.

The infrared reflection coating 113 is disposed between the second surface M2 and the fifth surface M5, that is, the infrared reflection coating is located between the outer glass plate 111 and the adhesive layer 114.

The projection light ray G emitted by the projection assembly 120 will be reflected on the fourth surface M4, the surface of the infrared reflection coating 113, and the first surface M1 respectively, forming a primary image and two secondary images. If brightness of any one secondary image is higher than brightness of the primary image, the secondary image will be easy to be observed by the human eyes, making the primary image blurred and unclear, and even causing a sense of dizziness to an observer due to long-term observation.

When the projection light ray G emitted by the projection assembly 120 is incident on the fourth surface M4, the projection light ray G is reflected by the fourth surface to form the primary image X. After passing through the inner glass plate 115 and the adhesive layer 114, the projection light ray G is incident on the infrared reflection coating 113 and is reflected by the infrared reflection coating 113 to form a first secondary image Y1. After passing through the infrared reflection coating 113, the projection light ray G is incident on the first surface M1 of the outer glass surface 111 and is reflected by the first surface M1 to form a second secondary image Y2.

Specifically, the laminated glass 110 is a laminated structure in which the outer glass plate 111, the infrared reflection coating 113, the adhesive layer 114, and the inner glass plate 115 are sequentially stacked with each other. Materials of the outer glass plate 111 and the inner glass plate 115 may be soda-lime glasses, aluminosilicate glasses, lithium silicate glasses, borosilicate glasses, etc. The adhesive layer 114 plays an adhesive role between the outer glass plate 111 and the inner glass plate 115, making the laminated glass 110 a firm whole. The infrared reflection coating 113 has specific functions, such as thermal insulation, heating, etc., which are determined by a composition of a coating system. Optionally, the infrared reflection coating 113 includes a metal layer, through which the infrared reflection coating 113 may have functions such as thermal insulation, heating, etc.

The laminated glass 110 has a first side C1 and a second side C2 opposite to each other. The first side C1 is a side where the first surface M1 is located, and the second side C2 is a side where the fourth surface M4 is located. The first surface M1 faces towards the outside of the vehicle, and the fourth surface M4 faces towards the inside of the vehicle. Therefore, from a perspective of the vehicle 1, the first side C1 can be understood as an outer side of the laminated glass 110, and the second side C2 can be understood as an inner side of the laminated glass 110.

The projection assembly 120 is installed inside the vehicle 1 and is configured to emit projection light ray G towards the inner side of the laminated glass 110, that is, the projection light ray G is emitted towards the fourth surface M4. After emitting the projection light ray G, three virtual images visible in the EB, the primary image X, the first secondary image Y1, and the second secondary image Y2, will be formed by the projection light ray G being reflected on different surfaces of the laminated glass 110 respectively. The first secondary image Y1 may also be referred to as a first ghost image, and the second secondary image Y2 may also be referred to as a second ghost image.

With regard to the primary image X, after reaching the fourth surface M4, a first light ray G1 in the projection light ray G is reflected by the fourth surface M4, thereby changing its propagation direction and propagating towards the EB. The first light ray G1 reflected by the fourth surface M4 is further defined as a first eye-entering light ray R1. The first eye-entering light ray R1 finally enters the EB, and the primary image X is formed on a line extending opposite to a propagation direction of the first eye-entering light ray R1.

With regard to the first secondary image Y1, after entering the laminated glass 110 and passing through the inner glass plate 115 and the adhesive layer 114 in sequence, a second light ray G2 in the projection light ray G reaches the infrared reflection coating 113, which may reflect part of the light ray. Being reflected by the infrared reflection coating 113, the second light ray G2 changes its propagation direction and propagates towards the fourth surface M4, and finally refracts and exits from the fourth surface M4. The second light ray G2 exiting from the fourth surface M4 is further defined as a second eye-entering light ray R2. The second eye-entering light ray R2 finally enters the EB, and the first secondary image Y1 is formed on a line extending opposite to a propagation direction of the second eye-entering light ray R2.

With regard to the second secondary image Y2, after entering the laminated glass 110 and passing through the inner glass plate 115, the adhesive layer 114, and the infrared reflection coating 113 in sequence, a third light ray G3 in the projection light ray G reaches the outer glass plate 111 and is reflected by the first surface M1, thus its propagation direction changes and then propagates towards the position of the fourth surface M4, and finally refracts and exits from the fourth surface M4. The third light ray G3 exiting from the fourth surface M4 is further defined as a third eye-entering light ray R3. The third eye-entering light ray R3 finally enters the EB, and the second secondary image Y2 is formed on a line extending opposite to a propagation direction of the third eye-entering light ray R3.

It may be noted that in FIG. 5, drawing the first secondary image Y1 below the primary image X and the second secondary image Y2 above the primary image X is only for the convenience of illustration in accompanying drawings, so as to better distinguish lines corresponding to light rays. In actual conditions, the first secondary image Y1 and the second secondary image Y2 may be both located above the primary image X at the same time, or may be both located below the primary image X at the same time.

In the laminated glass 110 provided in the present disclosure, the fifth surface M5 and the sixth surface M6 of the adhesive layer 114 incline relative to each other, so as to enable the adhesive layer 114 to be wedge-shaped. It can be understood that if an angle at which the fifth surface M5 and the sixth surface M6 incline relative to each other is changed, a propagation path of a light ray passing through the adhesive layer 114 will also be changed. With regard to the primary image X, it is formed by a first light ray G1 being directly reflected by the fourth surface M4, therefore a position of the primary image X will not be affected by a wedge-shaped adhesive layer 114. With regard to the first secondary image Y1, it is formed by a second light ray G2 being reflected by the infrared reflection coating 113, and the infrared reflection coating 113 is disposed between the outer glass plate 111 and the adhesive layer 114, therefore, in the process of being incident on the fourth surface M4 and exiting from the fourth surface M4, the second light ray G2 will pass through the adhesive layer 114, and a propagation path of the second light ray G2 will be affected by the wedge-shaped adhesive layer 114. With regard to the second secondary image Y2, it is formed by a third light ray G3 being reflected by the first surface M1, and in the process of being incident on the fourth surface M4 and exiting from the fourth surface M4, the third light ray G3 will pass through the adhesive layer 114, therefore, a propagation path of the third light ray G3 will be affected by the wedge-shaped adhesive layer 114. In summary, if the angle at which the fifth surface M5 and the sixth surface M6 incline relative to each other is changed, the propagation paths of the second light ray G2 and the third light ray G3 will be changed correspondingly, and the positions of the first secondary image Y1 and the second secondary image Y2 will further be changed. Therefore, in design phase, the angle at which the fifth surface M5 and the sixth surface M6 incline relative to each other may be set according to the position of the primary image X, making the first secondary image Y1 and the second secondary image Y2 as close as possible to the primary image X. Therefore, compared with a rectangular adhesive layer 114 in related art, the wedge-shaped adhesive layer 114 in the present disclosure enables the second light ray G2 and the third light ray G3 to deflect, so that the first secondary image Y1 and the second secondary image Y2 may get closer to the primary image X respectively. It can be understood that the closer the first secondary image Y1 and the second secondary image Y2 are to the primary image X respectively, the more the first secondary image Y1 and the second secondary image Y2 overlap with the primary image respectively, therefore the influence of the first secondary image Y1 and the second secondary image Y2 on the vision of the driver is reduced, the driving experience is improved, and even the first secondary image Y1 or the second secondary image Y2 may be completely overlapped with the primary image X, thereby further increasing the brightness of the primary image X.

Optionally, a thickness of the outer glass plate 111 is less than a thickness of the inner glass plate 115. With such arrangement, a distance between the primary image X and the second secondary image Y2 is relatively small, making the primary image X to be presented clearer.

When the outer glass plate 111 is a physical tempered glass, the thickness of the outer glass plate 111 ranges from 1.2 mm to 1.8 mm, for example, 1.26mm, 1.4 mm, 1.5 mm, 1.7 mm, etc. The physical tempered glass can be formed by a bending process at a high-temperature of at least 500°C.

When the outer glass plate 111 is a chemical tempered glass, the thickness of the outer glass plate 111 ranges from 0.5 mm to 1.2 mm, for example, 0.6mm, 0.88 mm, 0.95 mm, 1.0 mm, etc., with a range of 0.7 mm to 1.1 mm being preferred. In addition, the chemical tempered glass is preferred to be selected as a material of the outer glass plate 111.

A thickness of the adhesive layer 114 usually ranges from 0.3 mm to 1.0 mm, for example, 0.38 mm, 0.51 mm, 0.76mm, etc., with 0.38 mm and 0.76 mm being preferred, and 0.76 mm being more preferred.

A material of the adhesive layer 114 is at least one of polycarbonate (PC), polyvinyl chloride (PVC), polyvinyl butyral (PVB), ethylene-vinyl acetate (EVA), polyacrylate (PA), polymethyl methacrylate (PMMA), polyurethane (PUR), or ionic polymer (e.g., SentryGlas Plus (SGP)), where the PVB is preferred to be selected.

The infrared reflection coating 113 includes at least one metal layer, and a material of the at least one metal layer is at least one of aurum (Au), silver (Ag), copper (Cu), aluminum (Al), molybdenum (Mo), or an alloy, and where the alloy is composed of silver and at least one of copper (Cu), aurum (Au), palladium (Pd), tin (Sn), zinc (Zn), plumbum (Pb), or nickel (Ni). Specifically, the infrared reflection coating 113 may include 1 to 4 silver layers or silver alloy layers.

Referring to FIG. 4, ceramic ink or ultraviolet ink may be disposed on the second surface M2 and/or on the fourth surface M4 to form a shielding layer 112. The shielding layer 112 may be disposed on the second surface M2, or on the fourth surface M4, or on both the second surface M2 and the fourth surface M4. The shielding layer 112 may be disposed along a periphery of the laminated glass 110. The shielding layer 112 is used to improve appearance, to protect components inside the vehicle, and to enhance local adhesiveness. A visible light transmittance of the shielding layer 112 is lower than or equal to 1.5%, and an ultraviolet transmittance of the shielding layer 112 is lower than or equal to 0.05%.

Referring to FIG. 4, a preset wedge angle αS defined between the fifth surface M5 and the sixth surface M6 of the adhesive layer 114 (i.e. the preset wedge angle αS is an actual wedge angle of the adhesive layer 114, and is designed according to actual conditions and selected according to difficulty of production and manufacturing) satisfies the following. α1 ≤ αS ≤ α2. α1 represents a first theoretical wedge angle, the first theoretical wedge angle is a required angle defined between the fifth surface M5 and the sixth surface M6 for completely overlapping the first secondary image Y1 and the primary image X. That is, when αS equals to α1, the first sub-mage Y1 completely overlaps with the primary image X, which is equivalent to eliminating the first secondary image Y1. α2 represents a second theoretical wedge angle, the second theoretical wedge angle is a required angle defined between the fifth surface M5 and the sixth surface M6 for completely overlapping the second secondary image Y2 and the primary image X. That is, when αS equals to α2, the second secondary image Y2 completely overlaps with the primary image X, which is equivalent to eliminating the first second secondary image Y2.

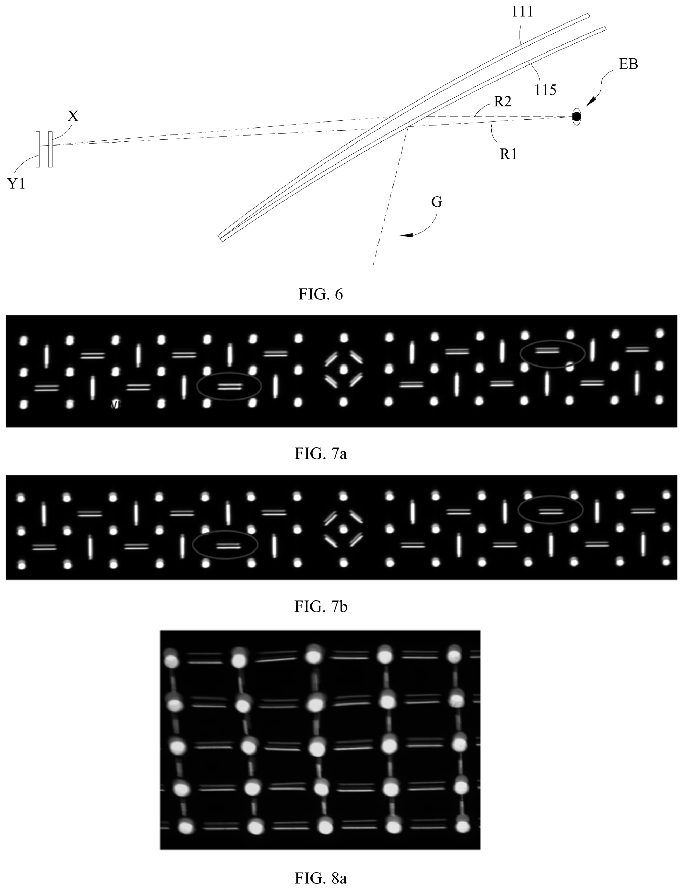

It may be noted that completely overlapping the first secondary image Y1 and the primary image X is specifically for the EB. Specifically, in one case, the first secondary image Y1 and the primary image X are at the same position, thus they appear to completely overlap as viewed from the EB. In another case, the first secondary image Y1 and the primary image X may be at different positions, yet they appear to overlap as viewed from the EB, thus such case also means that the first secondary image Y1 completely overlaps with the primary image X, as illustrated in FIG. 6. Correspondingly, same as above, completely overlapping the second secondary image Y2 and the primary image X is also specific to the EB, and will not be detailed herein.

It can be understood that when the first eye-entering light ray R1 and the second eye-entering light ray R2 are collinear, the first sub-mage Y1 will completely overlap with the primary image X as viewed from the EB. When the first eye-entering light ray R1 and the third eye-entering light ray R3 are collinear, the second secondary image Y2 will completely overlap with the primary image X as viewed from the EB.

In this embodiment, in order to balance the first secondary image Y1 and the second secondary image Y2, the preset wedge angle αS is set between the first theoretical wedge angle α1 and the second theoretical wedge angle α2, that is, α1 ≤ αS ≤ α2, enabling both the first secondary image Y1 and the second secondary image Y2 to be as close as possible to the primary image X. For example, the first theoretical wedge angle α1 corresponding to the first secondary image Y1 is 0.43 mrad, and the second theoretical wedge angle α2 corresponding to the second secondary image Y2 is 0.58 mrad, therefore, in order to balance the first secondary image Y1 and the second secondary image Y2, the preset wedge angle αS may be finally selected as 0.49 mrad.

Furthermore, the preset wedge angle αS defined between the fifth surface M5 and the sixth surface M6 of the adhesive layer 114 satisfies the following. When A1 ≥ A2, α2 - αS ≥ αS - α1. A1 represents a brightness ratio of the first secondary image Y1 and the primary image X, A1 = S1/S, A2 represents a brightness ratio of the second secondary image Y2 and the primary image X, A2 = S2/S, S1 represents brightness of the first secondary image Y1, S2 represents brightness of the second secondary image Y2, and S represents brightness of the primary image X.

In an implementation, when A1 ≥ A2, α2 - αS ≥ αS - α1. In another implementation, when A1 = A2, α2 - αS = αS - α1.

The applicant has found that the brightness of the first secondary image Y1 may be different from the brightness of the second secondary image Y2, thus, there may be a difference between A1 and A2. It can be understood that if the brightness of the first secondary image Y1 is higher than the brightness of the second secondary image Y2, the first secondary image Y1 will has more interference on the driver; conversely, if the brightness of the second image Y2 is higher than the brightness of the first image Y1, the second secondary image Y2 will has more interference on the driver.

In this embodiment, A1 ≥ A2 means that the brightness of the first secondary image Y1 is higher than the brightness of the second secondary image Y2, whereas α2 - αS ≥ αS - α1 means that the preset wedge angle αS is closer to the first theoretical wedge angle α1 than to the second theoretical wedge angle α2. It can be understood that, when the brightness of the first secondary image Y1 is higher than the brightness of the second secondary image Y2, the closer a set preset wedge angle αS is to the first theoretical wedge angle α1, the closer the first secondary image Y1 is to the primary image X at positions, so that the less the interference of the first secondary image Y1 has on the driver, that is, the influence of the first secondary image Y1 on the vision of the driver is reduced, and the driving experience is improved.

Furthermore, the preset wedge angle αS defined between the fifth surface M5 and the sixth surface M6 of the adhesive layer 114 satisfies the following. When A1 < A2, α2 - αS < αS - α1. A1 represents the brightness ratio of the first secondary image Y1 and the primary image X, A1 = S1/S, A2 represents the brightness ratio of the second secondary image Y2 and the primary image X, A2 = S2/S, S1 represents the brightness of the first secondary image Y1, S2 represents the brightness of the second secondary image Y2, and S represents the brightness of the primary image X.

In this embodiment, A1 < A2 means that the brightness of the first secondary image Y1 is lower than the brightness of the second secondary image Y2, whereas α2 - αS < αS - α1 means that the preset wedge angle αS is closer to the second theoretical wedge angle α2 than to the first theoretical wedge angle α1. It can be understood that, when the brightness of the second secondary image Y2 is higher than the brightness of the first secondary image Y1, the closer the set preset wedge angle αS is to the second theoretical wedge angle α2, the closer the second secondary image Y2 is to the primary image X at positions, so that the less the interference of the second secondary image Y2 has on the driver, that is, the influence of the second secondary image Y2 on the vision of the driver is reduced, and the driving experience is improved.

Furthermore, the laminated glass satisfies the following. α2 - αS ≤ 0.10 mrad, αS - α1 ≤ 0.14 mrad.

Optionally, α2 - αS ≤ 0.11 mrad, αS - α1 ≤ 0.16 mrad.

Preferably, α2 - αS ≤ 0.10 mrad, αS - α1 ≤ 0.14 mrad.

The smaller the difference between the preset wedge angle (αS) and the theoretical wedge angles (α1 and α2), the closer the first secondary image Y1 and the second secondary image Y2 are to the primary image X, making the secondary images more likely to be invisible to the human eyes, thereby achieving an effect equivalent to eliminating the secondary images.

Furthermore, the laminated glass satisfies the following. A1 ≤ 20% and/or A2 ≤ 20%. A1 represents the brightness ratio of the first secondary image Y1 and the primary image X, that is, a ratio of the brightness of the first secondary image Y1 and the brightness of the primary image X, A1 = S1/S, A2 represents the brightness ratio of the second secondary image Y2 and the primary image X, that is, a ratio of the brightness of the second secondary image Y2 and the brightness of the primary image X, A2 = S2/S, S1 represents the brightness of the first secondary image Y1, S2 represents the brightness of the second secondary image Y2, and S represents the brightness of the primary image X.

In this embodiment, A1 ≤ 20% means that the brightness of the first secondary image Y1 is lower than or equal to 20% of the brightness of the primary image X. Preferably, A1 ≤ 15%, and more preferably, A1 ≤ 10%. Specific examples may be A1 = 10%, 9%, 8%, 7%, 6%, 5%, 4%, 3%, 2% or 1%. Similarly, A2 ≤ 20% means that the brightness of the second secondary image Y2 is lower than or equal to 20% of the brightness of the primary image X. Preferably, A2 ≤ 15%, and more preferably, A2 ≤ 10%. Specific examples may be A2 = 10%, 9%, 8%, 7%, 6%, 5%, 4%, 3%, 2% or 1%. The laminated glass 110 may satisfy A1 ≤ 20%, or A2 ≤ 20%, or both A1 ≤ 20% and A2 ≤ 20%. A1 ≤ 20% means that the first secondary image Y1 is not obvious compared with the primary image X, and the first secondary image Y1 is difficult to be recognized as viewed from the EB, thereby improving a recognition of the primary image X. Similarly, A2 ≤ 20% means that the second secondary image Y2 is not obvious compared with the primary image X, and the second secondary image Y2 is difficult to be recognized as viewed from the EB, thereby improving the recognition of the primary image X.

Optionally, the preset wedge angle αS defined between the fifth surface M5 and the sixth surface M6 ranges from 0.1 mrad to 1.0 mrad. The preset wedge angle αS may further be preferred to be selected within a range of 0.2 mrad to 0.7 mrad, or 0.25 mrad to 0.55 mrad, or 0.3 mrad to 0.6 mrad.

In this embodiment, the preset wedge angle αS may specifically be 0.1 mrad, 0.15 mrad, 0.18 mrad, 0.2 mrad, 0.22 mrad, 0.25 mrad, 0.28 mrad, 0.3 mrad, 0.31 mrad, 0.33 mrad, 0.35 mrad, 0.37 mrad, 0.38 mrad, 0.4 mrad, 0.42 mrad, 0.45 mrad, 0.49 mrad, 0.5 mrad, 0.52 mrad, 0.55 mrad, 0.58 mrad, 0.6 mrad, 0.65 mrad, 0.68 mrad, 0.7 mrad, 0.75 mrad, 0.8 mrad, 0.82 mrad, 0.88 mrad, 0.9 mrad, 0.91 mrad, 0.96 mrad, 1.0 mrad, etc.

Optionally, a thickness H1 of the outer glass plate 111 ranges from 0.5 mm to 1.8 mm. In this embodiment, the thickness H1 of the outer glass plate 111 may specifically be 0.5 mm, 0.55 mm, 0.59 mm, 0.6 mm, 0.62 mm, 0.65 mm, 0.68 mm, 0.73 mm, 0.75 mm, 0.8 mm, 0.83 mm, 0.88 mm, 0.9 mm, 1.0 mm, 1.1 mm, 1.15 mm, 1.16 mm, 1.2 mm, 1.5 mm, 1.6 mm, 1.62 mm, 1.67 mm, 1.72 mm, 1.75mm, 1.79 mm, 1.8 mm, etc.

In this embodiment, by setting the thickness H1 of the outer glass plate 111 within a relative small thickness range of 0.5 mm to 1.8 mm, the first secondary image Y1 and the second secondary image Y2 are infinitely close to each other. When the first secondary image Y1 and the second secondary image Y2 are infinitely close to each other, the first theoretical wedge angle α1 and the second theoretical wedge angle α2 are also infinitely close to each other, which is more conducive to design and selection of the preset wedge angle αS, and is conducive to production and processing of the adhesive layer 114.

Specifically, in designing a wedge angle of the adhesive layer 114, it is necessary to balance the first secondary image Y1 and the second secondary image Y2. For example, in a case with the same brightness ratio, the first theoretical wedge angle α1 corresponding to the first secondary image Y1 is 0.46 mrad, and the second theoretical wedge angle α2 corresponding to the second secondary image Y2 is 0.54 mrad. In order to balance the two secondary images, a preset wedge angle αS of 0.5 mrad may be selected finally. However, setting the preset wedge angle αS as 0.5 mrad results in both relatively-large deviations from the first theoretical wedge angle α1 of 0.46 mrad and the second theoretical wedge angle α2 of 0.54 mrad, which is not ideal for balancing the first secondary image Y1 and the second secondary image Y2.

The applicant found that when the first secondary image Y1 and the second secondary image Y2 are infinitely close to each other, the first theoretical wedge angles α1 corresponding to the first secondary image Y1 and the second theoretical wedge angles α2 corresponding to the second secondary image Y2 are also infinitely close to each other, and vice versa. For example, when the first secondary image Y1 and the second secondary image Y2 are infinitely close to each other, the first theoretical wedge angle α1 corresponding to the first secondary image Y1 is 0.50 mrad, and the second theoretical wedge angle α2 corresponding to the second secondary image Y2 is 0.52 mrad, thus a preset wedge angle αS of 0.51 mrad may be set. Such preset wedge angle is ideal for balancing the first secondary image Y1 and the second secondary image Y2.

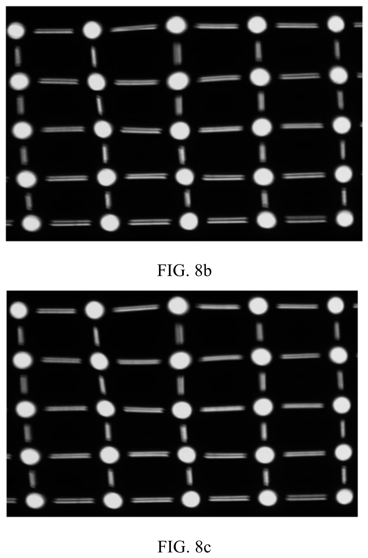

The applicant found that, the less the thickness H1 of the outer glass plate 111 is, the smaller a distance between the primary image X and the second secondary image Y2 is, and the clearer the primary image X is presented. For example, compared with a case with a 1.6 mm-thick outer glass plate 111, in a case with a 1.8 mm-thick outer glass plate 111, the distance between the primary image X and the second secondary image Y2 is larger, and the primary image X is presented more blurred, as illustrated in FIG. 7a, FIG. 7b, FIG. 8a, FIG. 8b, and FIG. 8c.

It may be noted that as illustrated in FIG. 7a, FIG. 7b, FIG. 8a, FIG. 8b, and FIG. 8c, dot-shaped and linear white parts are virtual images, and the one with higher brightness is the primary image X, while the other with lower brightness is the second secondary image Y2. The outer glass plate 111 is made of glass. Among first images exemplified in FIG. 7a and FIG. 7b, a ghosting condition of a first image when the thickness of the outer glass plate 111 is 1.8 mm is illustrated in FIG. 7a. A ghosting condition of the first image when the thickness of the outer glass plate 111 is 1.6 mm is illustrated in FIG. 7b. Among second images exemplified in FIG. 8a, FIG. 8b, and FIG. 8c, a ghosting condition when the thickness of the outer glass plate 111 is 2.1 mm is illustrated in FIG. 8a. A ghosting condition of a second image when the thickness of the outer glass plate 111 is 1.8 mm is illustrated in FIG. 8b. A ghosting condition of the second image when the thickness of the outer glass plate 111 is 1.6 mm is illustrated in FIG. 8c.

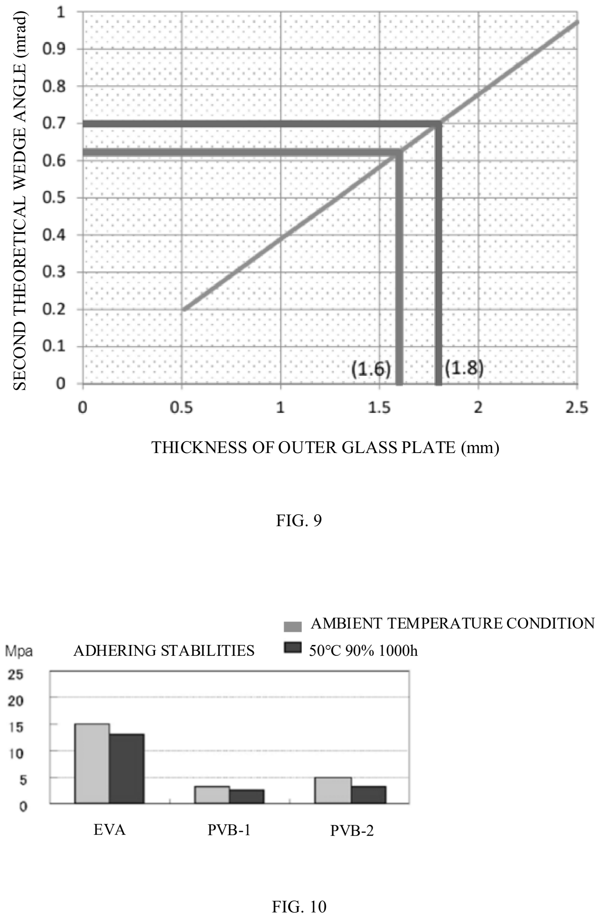

The applicant found that the thickness H1 of the outer glass plate 111 has a positive correlation with the second theoretical wedge angle α2 of the second secondary image Y2, that is, the smaller H1 is, the smaller α2 is. For example, when the thickness H1 of the outer glass plate 111 is 2.1 mm, the corresponding second theoretical wedge angle α2 of the second secondary image Y2 is 0.82 mrad; when the thickness H1 of the outer glass plate 111 is 1.8 mm, the corresponding second theoretical wedge angle α2 of the second secondary image Y2 is 0.7 mrad; when the thickness H1 of the outer glass plate 111 is 1.6 mm, the corresponding second theoretical wedge angle α2 of the second secondary image Y2 is 0.62 mrad; and when the thickness H1 of the outer glass plate 111 is 1.3 mm, the corresponding second theoretical wedge angle α2 of the second secondary image Y2 is 0.5 mrad. According to most of human-eyes recognition abilities, human eyes are unable to recognize a ghost image if the second theoretical wedge angle α2 is less than 0.5 mrad. That is, when the second theoretical wedge angle α2 is less than 0.5 mrad, it will be difficult for human eyes to distinguish the primary image X from the second secondary image Y2, that is, the primary image X and the second secondary image Y2 substantially overlap with each other as viewed from the EB. Therefore, for an outer glass plate 111 corresponding to a second theoretical wedge angle α2 that is smaller than 0.5mrad, an optimal thickness is less than 1.3 mm, as illustrated in FIG. 9. Considering the issue of strength of the outer glass plate 111, the outer glass plate 111 with a thickness less than 1.3 mm is recommended to be made of a tempered glass withstanding special chemical treatment, such as a chemical tempered glass. It may be noted that in FIG. 9, an abscissa represents the thickness H1 (mm) of the outer glass plate 111, and an ordinate represents the second theoretical wedge angle α2 (mrad).

Please further refer to Table 1, which presents results obtained from experiments implemented by the applicant. From the results in Table 1, when the thickness of the outer glass plate 111 remains unchanged and the thickness of the inner glass plate 115 is changed, both the first theoretical wedge angle α1 and the second theoretical wedge angle α2 increase or decrease simultaneously. However, when the thickness of the inner glass plate 115 remains unchanged and the thickness of the outer glass plate 111 is reduced, the first theoretical wedge angle α1 remains unchanged, while the second theoretical wedge angle α2 is smaller. In other words, the second theoretical wedge angle α2 gets closer to the first theoretical wedge angle α1, which is conducive to balancing the first secondary image Y1 and the second secondary image Y2, thereby respectively adjusting the first secondary image Y1 and the second secondary image Y2 to be as close as possible to the primary image X. Moreover, when the thickness of the inner glass plate 115 remains unchanged and the thickness of the outer glass plate 111 is reduced, a brightness ratio A2 of the second secondary image Y2 and the primary image X is also lowered, which is conducive to reducing the interference of the second secondary image Y2 on the primary image X.

**Table 1. Influence of Thickness of Outer Glass Plate and Inner Glass Plate on Imaging of Laminated Glass**

| | Comparative Embodiment 1 | Comparative Embodiment 2 | Comparative Embodiment 3 | Embodiment 4 | Embodiment 5 | Embodiment 6 | Embodiment 7 | Embodiment 8 |
|---|---|---|---|---|---|---|---|---|
| Thickness of Outer Glass Plate H1 (mm) | 2.1 | 2.1 | 1.8 | 1.6 | 1.4 | 1.2 | 1.0 | 0.7 |
| Infrared Reflection Coating | Three Silver Layers | Three Silver Layers | Three Silver Layers | Three Silver Layers | Three Silver Layers | Three Silver Layers | Three Silver Layers | Three Silver Layers |
| Thickness of Inner Glass Plate H2 (mm) | 2.1 | 1.8 | 2.1 | 2.1 | 2.1 | 2.1 | 2.1 | 2.1 |
| Brightness Ratio of First Secondary image and Primary image A1 | 16.3% | 14.0% | 16.3% | 16.3% | 16.3% | 16.3% | 16.3% | 16.3% |
| Brightness Ratio of Second Secondary image and Primary image A2 | 21.3% | 19.8% | 19.8% | 18.8% | 17.8% | 16.8% | 15.7% | 14.2% |
| First Theoretical Wedge Angle α1 (mrad) | 0.43 | 0.38 | 0.43 | 0.43 | 0.43 | 0.43 | 0.43 | 0.43 |
| Second Theoretical Wedge Angle α2 (mrad) | 0.75 | 0.70 | 0.70 | 0.67 | 0.64 | 0.61 | 0.58 | 0.53 |
| Preset Wedge Angle αS (mrad) | 0.59 | 0.54 | 0.59 | 0.57 | 0.56 | 0.54 | 0.49 | 0.47 |
| α2-αs (mrad) | 0.16 | 0.16 | 0.11 | 0.10 | 0.08 | 0.07 | 0.09 | 0.06 |
| αS-α1 (mrad) | 0.16 | 0.16 | 0.16 | 0.14 | 0.13 | 0.11 | 0.06 | 0.04 |

The following is a detailed introduction of the materials, processes, sizes, and other information of each of the stacked layers in the laminated glass 110.

An outer glass plate 111. The outer glass plate 111 has a first surface M1 facing towards an outside of the vehicle 1 and a second surface M2 facing towards an inside of the vehicle 1. When the outer glass plate 111 is a physical tempered glass, its thickness may be selected within a range of 1.2 mm to 1.8 mm, and the physical tempered glass can be formed by the bending process at a high-temperature of at least 500°C. When the outer glass plate 111 is a chemical tempered glass formed by special chemical treatment, the thickness of the outer glass plate 111 may range from 0.5 mm to 1.2 mm, with a range of 0.7 mm to 1.1 mm being more preferred. The chemical tempered glass contains different metal oxides, such as silicon dioxide, aluminum oxide, sodium oxide, magnesium oxide, etc. The outer glass plate 111 may be a transparent glass with a visible light transmittance ranging from 85% to 93%.

An inner glass plate 115. The inner glass plate 115 has a third surface M3 facing towards the outside of the vehicle 1 and a fourth surface M4 facing towards the inside of the vehicle 1. The inner glass plate 115 can be formed by the bending process at a high-temperature of at least 500°C. A thickness of the inner glass plate 115 may range from 1.6 mm to 5.0 mm. When the outer glass plate 111 is the physical tempered glass, the thickness of the inner glass plate 115 is preferred to be selected within a range of 1.6 mm to 2.6 mm, for example, 1.6 mm, 1.8 mm, 2.1 mm, 2.6 mm, etc., with 1.8 mm and 2.1 mm being preferably, and 1.8 mm being more preferably. When the outer glass plate 111 is the chemical tempered glass, the thickness of the inner glass plate 115 is preferred to be selected within a range of 3.0 mm to 5.0 mm, for example, 3.2 mm, 3.5 mm, 4.0 mm, 5.0 mm, etc., with 3.5 mm, 4.0 mm, and 5.0 mm being more preferred. The inner glass plate 115 may be a transparent glass with a visible light transmittance ranging from 85% to 93%, or may be an ordinary green glass with a visible light transmittance ranging from 80% to 88%.

An adhesive layer 114. The adhesive layer 114 is sandwiched between the outer glass plate 111 and the inner glass plate 115, and is used to adhere the second surface M2 and the third surface M3. The thickness of the adhesive layer 114 may range from 0.3 mm to 1.0 mm. The adhesive layer 114 is used to adhere and fix the outer glass plate 111 and the inner glass plate 115 together. For example, a material of the adhesive layer may be selected from polycarbonate (PC), polyvinyl chloride (PVC), polyvinyl butyral (PVB), ethylene-vinyl acetate (EVA), polyacrylate (PA), polymethyl methacrylate (PMMA), polyurethane (PUR), ionic polymer (e.g., SentryGlas Plus (SGP)), etc., with PVB being more preferred to be selected. Of course, the adhesive layer 114 may also have other functions, such as having a color to block sunlight or having a sound insulation function.

The adhesive layer 114 is made of a material with an uneven thickness. For example, referring to FIG. 4, the laminated glass 110 has a first end D1 (an end close to wheels after the laminated glass 110 being installed on the vehicle 1) and a second end D2 (an end far from the wheels after the laminated glass 110 being installed on the vehicle 1) opposite to each other. In a direction from the first end D1 to the second end D2, the adhesive layer 114 is a certain wedge-shaped film whose thickness gradually increases from 0.76 mm to 1.3 mm.

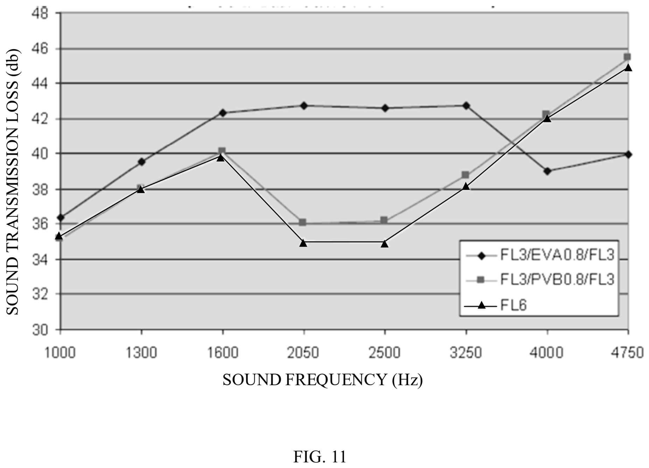

In some embodiments, the adhesive layer 114 may also be made of a modified EVA with high strength and high sound insulation performance. A vinyl acetate (VA) content in the modified EVA ranges from 5% to 40%. Through a crosslinking agent, the linear EVA copolymers are crosslinked to form a network structure, thereby acquiring a modified EVA with significant improvement in strength, high-temperature creep resistance, water-tightness, sound insulation, etc. According to FIG. 10, the adhesiveness of a modified EVA film is 3 to 4 times higher than that of a standard PVB film. According to FIG. 11, the modified EVA film has better sound insulation performance than the standard PVB film. Especially, in a sound frequency range of 1600 Hz to 3250 Hz, which is the most sensitive sound frequency range for human ears, a laminated glass formed by two 3 mm-thick glass plates and a 0.8 mm-thick modified EVA has a sound transmission loss of at least 42db.

In FIG. 11, FL3/EVA0.8/FL3 represents that a glass plate, a modified EVA, and a glass plate are sequentially stacked with each other. Here, FL3 stands for a 3 mm-thick glass plate, and EVA0.8 stands for a 0.8 mm-thick modified EVA. FL3/PVB0.8/FL3 represents that a glass plate, a standard PVB, and a glass plate are sequentially stacked with each other. Here, FL3 represents a 3 mm-thick glass plate, and PVB0.8 represents a 0.8 mm-thick standard PVB. FL6 represents a 6 mm-thick glass plate.

An infrared reflection coating 113. The infrared reflection coating 113 can be directly deposited on the second surface M2 through a chemical vapor deposition (CVD) or a physical vapor deposition (PVD), for example, a magnetron sputtering deposition; and a preferred infrared reflection coating 113 may be able to withstand a high-temperature thermal treatment, such as a thermal treatment with a bending process like bending through heat or tempering. Specifically, the infrared reflection coating 113 may include a metal layer, an alloy layer, or a metal oxide layer. A material of the metal layer may be selected from aurum (Au), silver (Ag), copper (Cu), aluminum (Al), and molybdenum (Mo). A material of the alloy layer may be a silver alloy. A material of the metal oxide layer may be selected from indium tin oxide, fluorine-doped tin oxide, aluminum-doped tin oxide, gallium-doped tin oxide, boron-doped tin oxide, tin-zinc oxide, antimony-doped tin oxide, etc. For example, when the infrared reflection coating 113 includes a silver layer or a silver alloy layer, the silver layer or the silver alloy layer is disposed between at least two dielectric layers, and the at least two dielectric layers contain at least one of zinc oxide, tin oxide, indium oxide, titanium oxide, silicon oxide, aluminum oxide, silicon nitride, silicon carbide, aluminum nitride, or a titanium layer. In some embodiments, the infrared reflection coating 113 may also be referred to as a transparent conductive coating.

Although the embodiments of the present disclosure have been illustrated and described above, it can be understood that the above embodiments are exemplary and cannot be understood as limitations as on the present disclosure. Those skilled in the art can make changes, modifications, replacements, and variations for the above embodiments within the scope of the present disclosure, and these improvements and modifications are also considered to fall into the protection scope of the present disclosure.

## Claims

1. A laminated glass for forming a primary image according to a projection light ray emitted by a projection assembly, comprising:
an outer glass plate, having a first surface and a second surface opposite to each other;
an inner glass plate, having a third surface and a fourth surface opposite to each other, the third surface and the second surface face towards each other;
an adhesive layer, disposed between the outer glass plate and the inner glass plate to adhere the outer glass plate with the inner glass plate, wherein the adhesive layer has a fifth surface and a sixth surface opposite to each other, the fifth surface and the second surface face towards each other, the sixth surface and the third surface face towards each other, and the fifth surface and the sixth surface incline relative to each other to enable the adhesive layer to be wedge-shaped; and
an infrared reflection coating, disposed between the second surface and the fifth surface;
wherein a thickness of the outer glass plate is less than a thickness of the inner glass plate;
a preset wedge angle αS defined between the fifth surface and the sixth surface of the adhesive layer satisfies the following: α1 ≤ αS ≤ α2;
when the projection light ray emitted by the projection assembly is incident on the fourth surface, the projection light ray is reflected by the fourth surface to form the primary image; after passing through the inner glass plate and the adhesive layer, the projection light ray is incident on the infrared reflection coating and is reflected by the infrared reflection coating to form a first secondary image; after passing through the infrared reflection coating, the projection light ray is incident on the first surface of the outer glass surface and is reflected by the first surface to form a second secondary image; and
α1 represents a first theoretical wedge angle, and the first theoretical wedge angle is a required angle defined between the fifth surface and the sixth surface for completely overlapping the first secondary image and the primary image; and α2 represents a second theoretical wedge angle, and the second theoretical wedge angle is a required angle defined between the fifth surface and the sixth surface for completely overlapping the second secondary image and the primary image.

2. The laminated glass of claim 1, wherein the preset wedge angle αS defined between the fifth surface and the sixth surface of the adhesive layer satisfies the following:
when A1 ≥ A2, α2 - αS ≥ αS - α1; and
when A1 < A2, α2 - αS < αS - α1;
wherein A1 represents a brightness ratio of the first secondary image and the primary image, A1=S1/S, A2 represents a brightness ratio of the second secondary image and the primary image, A2=S2/S, S1 represents brightness of the first secondary image, S2 represents brightness of the second secondary image, and S represents brightness of the primary image.

3. The laminated glass of claim 1, wherein the laminated glass satisfies the following:
α2 - αS ≤ 0.11 mrad, αS - α1 ≤ 0.16mrad.

4. The laminated glass of claim 3, wherein the laminated glass satisfies the following:
α2 - αS ≤ 0.10mrad, αS - α1 ≤ 0.14mrad.

5. The laminated glass of claim 1, wherein the laminated glass satisfies the following:
A1 ≤ 20% and/or A2 ≤ 20%;
wherein A1 represents a brightness ratio of the first secondary image and the primary image, A1 = S1/S, A2 represents a brightness ratio of the second secondary image and the primary image, A2 = S2/S, S1 represents brightness of the first secondary image, S2 represents brightness of the second secondary image, and S represents brightness of the primary image.

6. The laminated glass of claim 5, wherein the laminated glass satisfies the following:
A1 ≤ 10% and/or A2 ≤ 10%.

7. The laminated glass of claim 1, wherein the preset wedge angle αS defined between the fifth surface and the sixth surface ranges from 0.1 mrad to 1.0 mrad.

8. The laminated glass of claim 7, wherein the preset wedge angle αS ranges from 0.2 mrad to 0.7 mrad, or from 0.25 mrad to 0.55 mrad, or from 0.3mrad to 0.6mrad.

9. The laminated glass of claim 1, wherein a thickness H1 of the outer glass plate ranges from 0.5 mm to 1.8 mm.

10. The laminated glass of claim 1, wherein when the outer glass plate is a physical tempered glass, the thickness of the outer glass plate ranges from 1.2 mm to 1.8 mm;
when the outer glass plate is a chemical tempered glass, the thickness of the outer glass plate ranges from 0.5 mm to 1.2 mm.

11. The laminated glass of claim 1, wherein when the outer glass plate is a physical tempered glass, the thickness of the inner glass plate ranges from 1.6 mm to 2.6 mm; and when the outer glass plate is a chemical tempered glass, the thickness of the inner glass plate ranges from 3.0 mm to 5.0 mm.

12. The laminated glass of claim 1, wherein a thickness of the adhesive layer ranges from 0.3 mm to 1.0 mm.

13. The laminated glass of any of claims 1 to 12, wherein a material of the adhesive layer is at least one of polycarbonate (PC), polyvinyl chloride (PVC), polyvinyl butyral (PVB), ethylene-vinyl acetate (EVA), polyacrylate (PA), polymethyl methacrylate (PMMA), polyurethane (PUR), or ionic polymer coating (SentryGlas Plus (SGP)).

14. The laminated glass of any of claims 1 to 12, wherein the infrared reflection coating comprises at least one metal layer, and a material of the at least one metal layer is at least one of aurum (Au), silver (Ag), copper (Cu), aluminum (Al), molybdenum (Mo), or an alloy, and wherein the alloy is composed of silver and at least one of copper (Cu), aurum (Au), palladium (Pd), tin (Sn), zinc (Zn), plumbum (Pb), or nickel (Ni).

15. The laminated glass of claim 14, wherein the infrared reflection coating comprises 1 to 4 silver layers or silver alloy layers.

16. The laminated glass of any of claims 1 to 12, wherein the material of the adhesive layer is a modified ethylene-vinyl acetate (EVA), a vinyl acetate content in the modified EVA ranges from 5% to 40%, and in a sound frequency range of 1600 Hz to 3250 Hz, a laminated glass formed by two 3 mm-thick glass plates and a 0.8 mm-thick modified EVA has a sound transmission loss of at least 42 db.

17. The laminated glass of any of claims 1 to 12, wherein ceramic ink or ultraviolet ink is disposed on the second surface and/or on the fourth surface to form a shielding layer.

18. A display system, comprising a projection assembly and a laminated glass of any one of claims 1 to 17, wherein the projection assembly is configured to emit a projection light ray to the laminated glass.

19. The display system of claim 18, wherein a projection light ray comprises a S-polarized light in a proportion ranging from 20% to 90%.

20. A vehicle, comprising a vehicle frame and a display system of claim 18 or 19, wherein the display system is carried on the vehicle frame.
